# EUROPÄISCHE PATENTANMELDUNG

(11) **EP 4 332 388 A1**
(43) Veröffentlichungstag der Anmeldung: **06.03.2024**
(21) Anmeldenummer: 23194759.9
(22) Anmeldetag: 01.09.2023
(51) Int. Cl.: F16B 5/06, F16B 37/04

(54) **VORRICHTUNG ZUM AUSGLEICHEN VON TOLERANZEN**

(30) Priorität: 01.09.2022 DE 102022209111; 15.12.2022 DE 102022213688
(71) Anmelder: Witte Automotive GmbH, 42551 Velbert (DE)
(72) Erfinder: BENTE, Jan Christian, 45549 Sprockhövel (DE); SYCHA, Karin, 42551 Velbert (DE)
(74) Vertreter: Liedtke & Partner Patentanwälte

(57) **Zusammenfassung**

Die Erfindung betrifft eine Vorrichtung (10.x) zum Ausgleichen von Toleranzen zwischen zwei miteinander zu verbindenden Bauteilen (B1, B2), umfassend zumindest:
- ein Grundelement (20) und
- ein mit dem Grundelement (20) in Gewindeeingriff stehendes Ausgleichselement (30), welches durch Verdrehen relativ zu dem Grundelement (20) aus einer Ausgangsposition (P1) bewegbar ist,
- ein radial nachgiebiges und in eine vorgegebene Richtung (R) wirkendes Mitnahmeelement (50), und
- eine Haltevorrichtung (70, 700) zur Verbindung mit einem der Bauteile (B1, B2), wobei die Haltevorrichtung (70, 700) als ein integrierter Teil des Grundelements (20) oder des Ausgleichselements (30) oder als ein separates Teil ausgebildet ist und lösbar an einem der Bauteile (B1, B2) formschlüssig und/oder kraftschlüssig anordenbar ist, und
- wobei das Grundelement (20) und das Ausgleichselement (30) derart ineinander gesetzt sind, dass zwischen dem Grundelement (20) und dem Ausgleichselement (30) mindestens zwei Kopplungsschnittstellen (61 bis 63) gebildet sind.

## Beschreibung

Die Erfindung betrifft eine Vorrichtung zum Ausgleichen von Toleranzen zwischen zwei miteinander zu verbindenden Bauteilen.

Eine derartige Toleranzausgleichsvorrichtung ist grundsätzlich bekannt und kommt beispielsweise im Fahrzeugbau zum Einsatz, insbesondere wenn es darum geht, zwei Bauteile über einen toleranzbehafteten Fügespalt hinweg miteinander zu verschrauben. Die Toleranzausgleichsvorrichtung wird hierzu zwischen den zu verbindenden Bauteilen angeordnet, und ein Schraubelement zum Verschrauben der Bauteile, z. B. eine Schraube oder ein Gewindebolzen, wird durch entsprechend vorgesehene Öffnungen in den Bauteilen und durch die Toleranzausgleichsvorrichtung hindurchgeführt. Beim Verschrauben des Schraubelements wird das Ausgleichselement über eine zwischen das Schraubelement und das Ausgleichselement geschaltete Mitnahmefeder relativ zu dem Grundelement verdreht und dadurch aus seiner Ausgangsposition axial zu dem Grundelement bewegt, z. B. aus dem Grundelement herausgefahren, bis es seine Ausgleichsposition erreicht, in welcher das Grundelement und das Ausgleichselement jeweils an einem der Bauteile anliegen und so den Fügespalt überbrücken.

Aufgabe der vorliegenden Erfindung ist es, eine gegenüber dem Stand der Technik verbesserte Vorrichtung zum Ausgleich von Toleranzen zwischen zwei miteinander zu verbindenden Bauteilen anzugeben.

Hinsichtlich der Vorrichtung wird die Aufgabe erfindungsgemäß durch die im Anspruch 1 angegebenen Merkmale gelöst.

Eine erste Ausführungsform der erfindungsgemäßen Vorrichtung zum Ausgleichen von Toleranzen zwischen zwei miteinander zu verbindenden Bauteilen umfasst zumindest ein Grundelement und ein mit dem Grundelement in Gewindeeingriff stehendes Ausgleichselement, welches durch Verdrehen relativ zu dem Grundelement aus einer Ausgangsposition bewegbar ist, wobei das Grundelement und das Ausgleichselement derart ineinander gesetzt sind, dass zwischen dem Grundelement und dem Ausgleichselement mindestens zwei, insbesondere drei, Kopplungsschnittstellen gebildet sind.

Die Vorrichtung ermöglicht eine ineinander geschachtelte Bauweise bei gleichem Ausgleichsweg und vergleichsweise kleinerer, beispielsweise flacherer, Ausbildung.

Die mit der Erfindung erzielten Vorteile bestehen insbesondere darin, dass mittels einer solchen ineinander geschachtelten Anordnung des Grundelements und des Ausgleichselements die Vorrichtung vergleichsweise klein und kompakt ausgebildet werden kann, wobei eine Tragfähigkeit der Vorrichtung vergleichsweise gleichbleibt oder sogar erhöht werden kann. Zudem muss kein Ausgleichsweg, insbesondere Toleranzausgleichsweg, der Vorrichtung verkürzt werden, um eine vergleichsweise kleinere und kompaktere Bauweise der Vorrichtung zu erzielen.

Die zusätzliche Tragfähigkeit, die durch die zumindest zwei, insbesondere drei, Kopplungsschnittstellen und/oder durch die zumindest zwei, insbesondere drei, Gewindeeingriffe gegeben ist, kann eingesetzt werden, um hohe Festigkeiten zu erreichen, beispielsweise bei Verwendung von anderen Materialien außer Metall. Bekannte Toleranzausgleichssysteme sind aus Metall gefertigt. Die zumindest zwei Kopplungsschnittstellen sind an verschiedenen Bereichen zwischen dem Grundelement und dem Ausgleichselement ausgebildet. Beispielsweise können sich die zumindest zwei Kopplungsschnittstellen im Wesentlichen parallel und beabstandet zueinander erstrecken. Bei einer Ausgestaltung mit drei Kopplungsschnittstellen können alle drei Kopplungsschnittstellen parallel und beabstandet zueinander angeordnet sein.

Durch die ineinander geschachtelte Bauweise der Vorrichtung können/kann das Ausgleichselement und/oder das Grundelement aus Kunststoff gebildet werden. Kunststoff ermöglicht ein vereinfachtes Herstellungsverfahren und Produktionsverfahren sowie eine Kostenersparnis. Des Weiteren können/kann das Ausgleichselement und/oder das Grundelement vergleichsweise gewichtsreduziert ausgebildet sein.

Die Vorrichtung ist beispielsweise eine Toleranzausgleichsvorrichtung, insbesondere zum Ausgleichen von Toleranzen bei einer Befestigung einer Komponente an einem Bauteil mit einer Bohrung oder einem Sackloch. Toleranzausgleichsvorrichtungen sind Teil von Befestigungselementen zur Befestigung von Komponenten und Bauteilen untereinander, beispielsweise in Kraftfahrzeugen. Beispielsweise werden derartige Toleranzausgleichsvorrichtungen in einem der Bauteile eingepresst. Insbesondere ist die Vorrichtung ein automatisches Toleranzkompensationssystem.

In einer möglichen Ausführungsform ist das Ausgleichselement an einer ersten Stirnseite des Grundelements angeordnet. Das Ausgleichselement kann zum Toleranzausgleich zwischen zwei Bauteilen relativ zum Grundelement verstellt werden. Das Ausgleichselement ist an der ersten Stirnseite des Grundelements, d. h. in axialer Richtung des Grundelements gesehen, angeordnet. Das Ausgleichselement kann relativ zum Grundelement axial beweglich angeordnet sein.

Das Ausgleichselement kann als ein mit einem Grundelement in Gewindeeingriff stehendes oder bringbares hohlzylindrisches Ausgleichselement ausgebildet sein, welches durch Verdrehen relativ zu dem Grundelement aus der Ausgangsposition in eine Ausgleichsposition axial bewegbar ist.

Beispielsweise sind die Kopplungsschnittstellen radial voneinander beabstandet. Insbesondere können die Kopplungsschnittstellen im Wesentlichen parallel zueinander angeordnet sein. Die Kopplungsschnittstellen können sich in axialer Richtung entlang des Grundelements und/oder des Ausgleichselements erstrecken.

Die Kopplungsschnittstellen können beispielsweise durch mehrere ineinander geschachtelte und axial bewegliche Gewindegänge von Grundelement und Ausgleichselement gebildet sein.

Eine Weiterbildung der Erfindung sieht vor, dass das Grundelement und das Ausgleichselement jeweils als Doppelringe ausgebildet sind. Der jeweilige Doppelring kann aus einem Innenring und einem Außenring gebildet sein. Innenring und Außenring eines jeweiligen Doppelrings können miteinander über einen Verbindungssteg verbunden sein.

Beispielsweise kann das als Doppelring ausgebildete Ausgleichselement einen beweglichen, insbesondere axial beweglichen, Außenring, der mit einem Innengewinde und einem Außengewinde versehen ist, und einen beweglichen, insbesondere axial beweglichen, Innenring aufweisen, der mit einem Außengewinde versehen ist. Mit anderen Worten: Das Ausgleichselement ist beweglich angeordnet, beispielsweise axial beweglich relativ zum festen Grundelement, angeordnet. Der dem als Doppelring ausgebildeten Ausgleichselement zugehörige Innenring und der zugehörige Außenring sind somit ebenfalls beweglich, insbesondere axial beweglich, angeordnet und als beweglicher Innenring und beweglicher Außenring ausgebildet.

Der bewegliche Innenring und der bewegliche Außenring des Ausgleichselements können über einen Anlageabschnitt des Ausgleichselements miteinander verbunden sein. Beispielsweise bildet der Anlageabschnitt einen Verbindungssteg. Zum Beispiel weist das Ausgleichselement an seiner Oberseite den Anlageabschnitt auf, welcher dazu dient, die Vorrichtung gegen ein Bauteil abzustützen und/oder das Ausgleichselement am Grundelement abzustützen. Vom Anlageabschnitt können der bewegliche Innenring und der bewegliche Außenring des Ausgleichselements abragen, beispielsweise im Wesentlichen senkrecht nach unten abragen.

Beispielsweise kann das Grundelement einen festen, insbesondere einen lagefesten oder ortsfesten, Außenring, der mit einem Innengewinde versehen ist, und einen festen, insbesondere einen lagefesten oder ortsfesten, Innenring aufweisen, der mit einem Außengewinde und einem Innengewinde versehen ist. Mit anderen Worten: Das Grundelement ist ortsfest oder positionsfest angeordnet, beispielsweise gehalten. Der dem als Doppelring ausgebildeten Grundelement zugehörige Innenring und der zugehörige Außenring sind somit ebenfalls ortsfest oder positionsfest angeordnet und als fester Innenring und fester Außenring ausgebildet.

Der feste Innenring und der feste Außenring des Grundelements können über einen Anlageabschnitt des Grundelements miteinander verbunden sein. Beispielsweise bildet der Anlageabschnitt einen Verbindungssteg. Zum Beispiel weist das Grundelement an seiner Unterseite den Anlageabschnitt auf, welcher dazu dient, die Vorrichtung gegen ein Bauteil abzustützen. Vom Anlageabschnitt können der Innenring und der Außenring des Grundelements abragen, beispielsweise im Wesentlichen senkrecht nach oben abragen.

Im vormontierten und/oder montierten Zustand der Vorrichtung: Der bewegliche Innenring des Ausgleichselements kann in einem Hohlraum des festen Innenrings des Grundelements aufgenommen sein. Der bewegliche Außenring des Ausgleichselements kann zwischen dem festen Innenring des Grundelements und dem festen Außenring des Grundelements aufgenommen sein. Dadurch bildet sich eine ineinander geschachtelte und axial bewegliche Kopplung von Grundelement und Ausgleichselement.

In einer möglichen Ausführungsform weist das Ausgleichselement einen inneren Hohlraum auf, in dem zumindest ein Mitnahmeelement zur Verbindung mit einem Schraubelement angeordnet ist. Der innere Hohlraum kann beispielsweise durch eine Öffnung im beweglichen Innenring des Ausgleichselements ausgebildet sein. Das Schraubelement kann mit dem Mitnahmeelement derart in Reibeingriff stehen, dass ein durch das Schraubelement ausgeübtes Drehmoment an das Ausgleichselement, insbesondere an dessen beweglichen Innenring, übertragbar ist und das Ausgleichselement mit dreht, insbesondere dieses axial aus oder in das Grundelement herausgeschraubt beziehungsweise hineingeschraubt.

Darüber hinaus kann das Ausgleichselement ein Gewindeelement zur Verschraubung mit einem sich durch den festen Innenring des Grundelements und den beweglichen Innenring des Ausgleichselements hindurch erstreckenden Schraubelement aufweisen.

Zusätzlich kann eine Sicherungsanordnung zur Sicherung, insbesondere Fixierung, des Ausgleichselements gegen eine Bewegung relativ zu dem Grundelement vorgesehen sein. Die Sicherungsanordnung dient beispielsweise zur Transportsicherung und/oder Verliersicherung.

Eine zweite Ausführungsform der erfindungsgemäßen Vorrichtung zum Ausgleichen von Toleranzen zwischen zwei miteinander zu verbindenden Bauteilen umfasst zumindest ein Grundelement und ein mit dem Grundelement in Gewindeeingriff stehendes Ausgleichselement, welches durch Verdrehen relativ zu dem Grundelement aus einer Ausgangsposition bewegbar ist, wobei das Grundelement zumindest einen ersten Kopplungsraum, einen zum ersten Kopplungsraum radial beabstandeten zweiten Kopplungsraum und optional einen dritten Kopplungsraum aufweist, und wobei das Ausgleichselement ausgebildet ist, mit dem jeweiligen Kopplungsraum des Grundelements in Gewindeeingriff zu stehen. Die Vorrichtung ermöglicht eine ineinander geschachtelte Bauweise bei gleichem Ausgleichsweg und vergleichsweise kleinerer, beispielsweise flacherer, Ausbildung.

Beispielsweise kann der erste Kopplungsraum in Form einer Aussparung ausgebildet sein, der mit ersten Gewindegängen versehen ist. Der zweite Kopplungsraum kann in Form einer weiteren Aussparung ausgebildet sein, der mit zweiten Gewindegängen versehen ist. Der erste Kopplungsraum und der zweite Kopplungsraum können jeweils durch Gewindepaarungen aus einem Innengewinde des Ausgleichselements und einem Außengewinde des Grundelements oder aus einem Außengewinde des Ausgleichselements und einem Innengewinde des Grundelements gebildet sein. Der dritte Kopplungsraum kann in Form einer Reibschlussverbindung ausgebildet sein. Der dritte Kopplungsraum kann durch eine Wandpaarung von einer Innenwand des Ausgleichselements und einer Außenwand des Grundelements oder einer Wandpaarung von einer Außenwand des Ausgleichselements und einer Innenwand des Grundelements gebildet sein. Die Kopplungsräume können sich beispielsweise in axialer Richtung entlang des Grundelements und/oder des Ausgleichselements erstrecken. Die Kopplungsräume können radial voneinander beabstandet sein. Die Kopplungsräume können parallel zueinander verlaufend angeordnet sein.

Die ersten Gewindegänge können ein Innengewinde bilden. Die ersten Gewindegänge sind mit dem Ausgleichselement in Gewindeeingriff bringbar oder gebracht. Das Grundelement kann beispielsweise im Wesentlichen hohlzylindrisch ausgebildet sein und an seiner Innenseite, d. h. an einer Mantelfläche seines ersten, insbesondere inneren Kopplungsraums, ein Innengewinde aufweisen.

Der zweite Kopplungsraum kann an einer Stirnseite des Grundelements offen und an der anderen Stirnseite des Grundelements geschlossen ausgebildet sein. Die zweiten Gewindegänge können beispielsweise ein Innengewinde ausbilden. Das Grundelement kann an einer Innenseite des zweiten Kopplungsraums, d. h. an einer Mantelfläche des zweiten Kopplungsraums, ein Innengewinde aufweisen.

Beispielsweise kann der zweite Kopplungsraum des Grundelements dritte Gewindegänge aufweisen. Die dritten Gewindegänge können ein Außengewinde ausbilden. Die zweiten Gewindegänge und dritten Gewindegänge können an sich gegenüberliegende Wandungen des zweiten Kopplungsraums angeordnet sein. Die zweiten und/oder dritten Gewindegänge sind/ist mit dem Ausgleichselement in Gewindeeingriff bringbar oder gebracht.

Darüber hinaus kann das Grundelement einen, insbesondere festen, Innenring und einen, insbesondere festen, Außenring aufweisen, die an einer Stirnseite über einen Anlageabschnitt, beispielsweise einen Verbindungssteg, miteinander verbunden sind. Der erste Kopplungsraum ist beispielsweise durch den Innenring, beispielsweise durch eine innere Öffnung des Innenrings, und/oder im Innenring gebildet. Der zweite Kopplungsraum ist beispielsweise zwischen dem Innenring und dem Außenring des Grundelements angeordnet. Der zweite Kopplungsraum ist durch den Innenring vom ersten Kopplungsraum getrennt. Der zweite Kopplungsraum ist vom Außenring des Grundelements radial nach außen eingeschlossen. Der Innenring und der Außenring sind beispielsweise radial voneinander beabstandet. Zum Beispiel kann eine erste Seite, insbesondere Innenseite, des Innenrings des Grundelements mit den ersten Gewindegängen versehen sein. Eine zweite Seite, insbesondere Außenseite, des Innenrings des Grundelements kann mit den zweiten Gewindegängen versehen sein. Alternativ oder optional zusätzlich kann eine Innenseite des Außenrings des Grundelements mit den dritten Gewindegängen versehen sein. Die Außenseite des Innenrings und die Innenseite des Außenrings können einander zugewandt sein.

Darüber hinaus kann das Ausgleichselement einen, insbesondere beweglichen, Innenring und einen, insbesondere beweglichen, Außenring aufweisen, die an einer Stirnseite über einen Anlageabschnitt, beispielsweise einen Verbindungssteg, miteinander verbunden sind. Der Innenring und der Außenring des Ausgleichselements sind beispielsweise radial voneinander beabstandet. Der Innenring des Ausgleichselements ist in dem ersten Kopplungsraum des Grundelements aufnehmbar oder aufgenommen. Der Außenring des Ausgleichselements ist in dem zweiten Kopplungsraum des Grundelements aufnehmbar oder aufgenommen. Der Außenring des Ausgleichselements kann mit einem Innengewinde, beispielsweise mit den zweiten Gewindegängen des Grundelements korrespondierend, und/oder einem Außengewinde, beispielsweise mit den dritten Gewindegängen des Grundelements korrespondierend, versehen sein. Der Innenring des Ausgleichselements kann mit einem Außengewinde, beispielsweise mit den ersten Gewindegängen des Grundelements korrespondierend, versehen sein.

In einer möglichen Ausführungsform sind das Grundelement und das Ausgleichselement jeweils als Doppelringe ausgebildet.

Im vormontierten und/oder montierten Zustand der Vorrichtung ist der Innenring des Ausgleichselements im ersten Kopplungsraum des Grundelements angeordnet und mit diesem in Gewindeeingriff. Der Außenring des Ausgleichselements ist im zweiten Kopplungsraum des Grundelements angeordnet und mit diesem in Gewindeeingriff.

Beiden zuvor beschriebenen Ausführungsformen ist gleich, dass diese jeweils ein radial nachgiebiges und in Verbindungsrichtung oder Einsteckrichtung wirkendes Mitnahmeelement aufweisen können. Mittels des Mitnahmeelements kann eine reibschlüssige Verbindung mit einem Verbindungselement, insbesondere einer Befestigungsschraube, zum Verbinden der beiden Bauteile und der Vorrichtung, herstellbar sein oder hergestellt werden. Unter Verbindungsrichtung wird insbesondere die axial wirkende Verbindungskraft der Vorrichtung verstanden. Unter der Einsteckrichtung wird insbesondere die Einsteckrichtung des Verbindungselements verstanden.

In einer möglichen Ausführungsform kann das Mitnahmeelement beispielsweise als ein sich radial aufweitender Spreizkörper ausgebildet sein. Das Mitnahmeelement kann beispielsweise mindestens eine oder mehrere radial vorstehende/n Nase/n, insbesondere ein oder mehrere Hakenelemente, umfassen. Vorzugsweise umfasst das Mitnahmeelement zwei gegenüberliegende, radial vorstehende, insbesondere radial nach außen vorstehende, Nasen. Mittels der Nasen ist das Mitnahmeelement drehfest im Ausgleichselement angeordnet, so dass bei einer auf das Mitnahmeelement einwirkenden Kraft, insbesondere einer Drehkraft, das Ausgleichselement mitgenommen wird und sich dieses relativ zum Grundelement dreht.

Der Spreizkörper kann zum Beispiel zumindest bereichsweise wenigstens einen Längsschlitz aufweisen, dessen Breite auf die durch Verformung zu überbrückende Radialtoleranz abgestimmt ist. Die Außenkontur des Mitnahmeelements ist insbesondere an die Innenkontur des hohlzylindrischen Ausgleichselements, insbesondere an dessen Hohlraum, angepasst.

In einer weiteren Ausführungsform kann das Mitnahmeelement vollständig von dem Ausgleichselement aufgenommen sein. Dies ermöglicht eine besonders kompakte Anordnung und eine Vormontage des Mitnahmeelements in dem Ausgleichselement.

Beiden zuvor beschriebenen Ausführungsformen ist gleich, dass eine Haltevorrichtung zur Verbindung mit einem der Bauteile vorgesehen sein kann.

Die Haltevorrichtung kann als ein integrierter Teil des Grundelements oder des Ausgleichselements oder als ein separates Teil ausgebildet sein. Die Haltevorrichtung kann lösbar an einem der Bauteile formschlüssig und/oder kraftschlüssig, beispielsweise als eine Rastverbindung, eine Klipsverbindung oder eine Klemmverbindung, anordenbar sein. Hierdurch ist eine Vormontage der Vorrichtung an einem der Bauteile in einfacher Art und Weise ermöglicht.

Die Haltevorrichtung kann bei einer separaten Ausbildung beispielsweise mit dem Grundelement oder dem Ausgleichselement formschlüssig und/oder kraftschlüssig verbindbar sein. Beispielsweise kann die Haltevorrichtung geklipst, geklemmt oder verrastet mit dem Grundelement oder dem Ausgleichselement verbindbar oder lösbar verbunden sein.

Für weitere mögliche Ausführungsformen können die oben genannte Merkmale, einzeln oder in Kombination miteinander, eingesetzt werden.

Ausführungsbeispiele der Erfindung werden anhand von Zeichnungen näher erläutert. Dabei zeigen:
- Figur 1: schematisch eine Schnittdarstellung eines ersten Ausführungsbeispiels einer Vorrichtung zum Ausgleichen von Toleranzen zwischen zwei miteinander zu verbindenden Bauteilen mit zwei Kopplungsschnittstellen,
- Figur 2: schematisch eine Schnittdarstellung eines zweiten Ausführungsbeispiels einer Vorrichtung zum Ausgleichen von Toleranzen zwischen zwei miteinander zu verbindenden Bauteilen mit zwei Kopplungsschnittstellen,
- Figur 3: schematisch eine Schnittdarstellung eines dritten Ausführungsbeispiels einer Vorrichtung zum Ausgleichen von Toleranzen zwischen zwei miteinander zu verbindenden Bauteilen mit drei Kopplungsschnittstellen,
- Figur 4: schematisch eine Schnittdarstellung der Vorrichtung gemäß dem Ausführungsbeispiel nach Fig. 3,
- Figur 5: schematisch eine perspektivische Ansicht der Vorrichtung gemäß einem der Ausführungsbeispiele nach Fig. 1 bis 3,
- Figur 6: schematisch eine perspektivische Ansicht eines Ausgleichselements der Vorrichtung gemäß Fig. 3,
- Figur 7: schematisch eine perspektivische Ansicht eines Grundelements gemäß Fig. 3,
- Figur 8: schematisch eine Schnittdarstellung eines vierten Ausführungsbeispiels einer Vorrichtung zum Ausgleichen von Toleranzen zwischen zwei miteinander zu verbindenden Bauteilen mit zwei Kopplungsschnittstellen,
- Figur 9: schematisch eine perspektivische Ansicht der Vorrichtung gemäß dem Ausführungsbeispiel nach Fig. 8, beispielsweise in einem Transportzustand,
- Figur 10: schematisch eine weitere perspektivische Ansicht der Vorrichtung gemäß dem Ausführungsbeispiel nach Fig. 8,
- Figur 11: schematisch eine perspektivische Ansicht der Vorrichtung gemäß Fig. 10,
- Figur 12: schematisch eine perspektivische Ansicht eines fünften Ausführungsbeispiels einer Vorrichtung zum Ausgleichen von Toleranzen zwischen zwei miteinander zu verbindenden Bauteilen mit zwei Kopplungsschnittstellen,
- Figur 13: schematisch eine Schnittdarstellung der Vorrichtung gemäß Fig. 12,
- Figur 14: schematisch eine perspektivische Ansicht eines sechsten Ausführungsbeispiels einer Vorrichtung zum Ausgleichen von Toleranzen zwischen zwei miteinander zu verbindenden Bauteilen mit zwei Kopplungsschnittstellen,
- Figur 15: schematisch eine Schnittdarstellung der Vorrichtung gemäß Fig. 14,
- Figur 16: schematisch eine perspektivische Ansicht eines siebten Ausführungsbeispiels einer Vorrichtung zum Ausgleichen von Toleranzen zwischen zwei miteinander zu verbindenden Bauteilen mit zwei Kopplungsschnittstellen,
- Figur 17: schematisch eine perspektivische Ansicht eines achten Ausführungsbeispiels einer Vorrichtung zum Ausgleichen von Toleranzen zwischen zwei miteinander zu verbindenden Bauteilen mit zwei Kopplungsschnittstellen, und
- Figur 18: schematisch eine Schnittdarstellung der Vorrichtung gemäß Fig. 17.

Einander entsprechende Teile sind in allen Figuren mit den gleichen Bezugszeichen versehen.

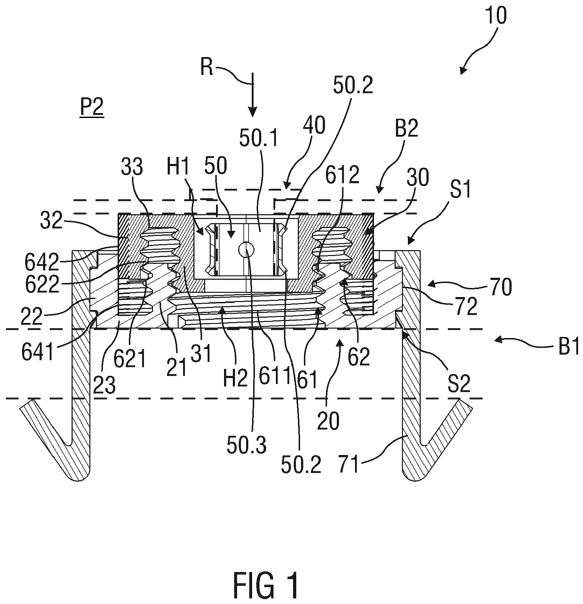

Figur 1 zeigt schematisch eine Schnittdarstellung eines ersten Ausführungsbeispiels einer Vorrichtung 10 zum Ausgleichen von Toleranzen zwischen zwei miteinander zu verbindenden Bauteilen B1, B2, die durch Strichlinien angedeutet sind. Die Vorrichtung 10 kann beispielsweise eine Toleranzausgleichsvorrichtung und/oder eine Toleranzkompensationsvorrichtung sein.

Figur 1 kann die Vorrichtung 10 beispielsweise in einem mit den Bauteilen B1, B2 montierten Zustand darstellen.

Die Vorrichtung 10 umfasst ein Grundelement 20. Die Vorrichtung 10 umfasst ein Ausgleichselement 30, welches durch Verdrehen relativ zum Grundelement 20 bewegbar ist. Das Ausgleichselement 30 ist koaxial zum Grundelement 20 angeordnet.

Im dargestellten Ausführungsbeispiel weist das Grundelement 20 eine erste, beispielsweise obere, Stirnseite S1 und eine der ersten Stirnseite S1 gegenüberliegende zweite, beispielweise untere, Stirnseite S2 auf. Die zweite Stirnseite S2 kann an dem ersten, unteren Bauteil B1 aufliegen. An der ersten Stirnseite S1 ist das Ausgleichselement 30 angeordnet.

Zur Verbindung, insbesondere Verschraubung, der Bauteile B1 und B2 wird die Vorrichtung 10 zwischen diesen angeordnet und ein Schraubelement 40 oder ein anderes Befestigungselement wird von oben durch eine Öffnung des zweiten Bauteils B2, die Vorrichtung 10 und optional zusätzlich beispielsweise durch eine Öffnung des ersten Bauteils B1 hindurchgeführt.

Dabei kann das Schraubelement 40 in Eingriff, beispielsweise Reibeingriff, mit einem Mitnahmeelement 50 kommen, welches im Ausgleichselement 30 angeordnet ist, um ein durch das Schraubelement 40 ausgeübtes Drehmoment an das Ausgleichselement 30 zu übertragen.

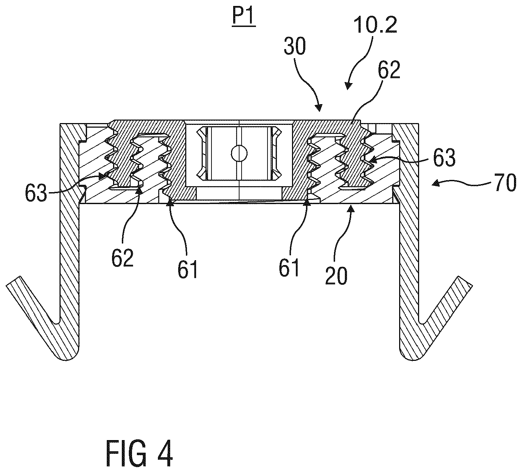

Beim Verschrauben des Schraubelements 40 wird das Ausgleichselement 30 über das zwischen das Schraubelement 40 und das Ausgleichselement 30 geschaltete Mitnahmeelement 50 relativ zu dem Grundelement 20 verdreht und dadurch aus seiner Ausgangsposition P1, dargestellt in Figur 4, axial zu dem Grundelement 20 bewegt, z. B. aus dem Grundelement 20 herausgefahren, bis es seine Ausgleichsposition P2 erreicht, in welcher das Grundelement 20 und das Ausgleichselement 30 jeweils an einem der Bauteile B1, B2 anliegen. Somit kann beispielsweise ein Fügespalt ausgeglichen oder überbrückt werden.

Das Mitnahmeelement 50 stützt sich beispielsweise an einer Mantelfläche eines inneren Hohlraums H1 des Ausgleichselements 30 ab. Das Mitnahmeelement 50 kann eine Mitnahmefeder oder ein anderes Federelement sein.

Das Mitnahmeelement 50 ist beispielsweise als ein radial nachgiebiges und in Richtung R, insbesondere in Verbindungsrichtung oder Einsteckrichtung, wirkendes Mitnahmeelement 50 ausgebildet. Mittels des Mitnahmeelements 50 kann eine reibschlüssige Verbindung mit einem zum Beispiel als Schraubelement 40 ausgebildeten Verbindungselement zum Verbinden der beiden Bauteile B 1, B2 und der Vorrichtung 10 herstellbar sein oder hergestellt werden.

In einer möglichen Ausführungsform kann das Mitnahmeelement 50 beispielsweise als ein sich radial aufweitender Spreizkörper 50.1 ausgebildet sein. Das Mitnahmeelement 50.1 kann beispielsweise mindestens eine oder mehrere radial vorstehendein Nase/n 50.2, insbesondere ein oder mehrere Hakenelemente, umfassen. Vorzugsweise umfasst das Mitnahmeelement 50 zwei gegenüberliegende, radial vorstehende, insbesondere radial nach außen vorstehende, Nasen 50.2. Mittels der Nasen 50.2 ist das Mitnahmeelement 50 drehfest im Ausgleichselement 30 angeordnet, so dass bei einer auf das Mitnahmeelement 50 einwirkenden Kraft ein Drehmoment auf das Ausgleichselement ausgeübt und dieses mitgenommen wird und sich dieses relativ zum Grundelement 20 dreht.

Der Spreizkörper 50.1 kann zum Beispiel zumindest bereichsweise wenigstens eine Ausnehmung 50.3, insbesondere einen Längsschlitz oder eine Durchgangsöffnung, aufweisen, deren Breite auf die durch Verformung zu überbrückende Radialtoleranz abgestimmt ist. Die Außenkontur des Mitnahmeelements 50 ist insbesondere an die Innenkontur des hohlzylindrischen Ausgleichselements 30, insbesondere an dessen Hohlraum H1, angepasst.

In einer weiteren Ausführungsform kann das Mitnahmeelement 50 vollständig von dem Ausgleichselement 30 aufgenommen sein. Mit anderen Worten: Das Mitnahmeelement 50 ist vollständig in dem Hohlraum H1 angeordnet. Dies ermöglicht eine besonders kompakte Anordnung und eine Vormontage des Mitnahmeelements 50 in dem Ausgleichselement 30.

Das Grundelement 20 und das Ausgleichselement 30 sind derart ineinander gesetzt, dass jeweils zwischen dem Grundelement 20 und dem Ausgleichselement 30 zumindest zwei Kopplungsschnittstellen 61, 62 und/oder 63 und bevorzugt drei Kopplungsschnittstellen 61 bis 63 gebildet sind.

Grundsätzlich können das Grundelement 20 und das Ausgleichselement 30 im Wesentlichen die gleiche Form aufweisen. Das Grundelement 20 und das Ausgleichselement 30 können zueinander komplementär ausgebildet sein. Dadurch kann eine ineinander geschachtelte Bauweise mit einem ausreichenden Toleranzausgleichsweg und einer hohen Tragfähigkeit erzielt werden.

Die beiden Kopplungsschnittstellen 61, 62 und optional 63 sind radial voneinander beabstandet. Die Kopplungsschnittstellen 61, 62 und optional 63 sind durch mehrere ineinander geschachtelte und axial bewegliche Kopplungsabschnitte, insbesondere axial bewegliche Gewindegänge 611, 612 und 621, 622 und optional axial bewegliche Gleitabschnitte 641, 642 von Grundelement 20 und Ausgleichselement 30 gebildet. Die optionale Kopplungsschnittstelle 63 ist beispielsweise durch zwei geeignete Gleitflächen für eine axiale Beweglichkeit der Gleitabschnitte 641 und 642 zueinander ausgebildet.

Mit anderen Worten: Das Ausgleichselement 30 und das Grundelement 20 umfassen korrespondierende erste Gewindegänge 611, 612, die zueinander ausgerichtet sind und in einem Gewindeeingriff eine erste Kopplungsschnittstelle 61 ausbilden.

Das Ausgleichselement 30 und das Grundelement 20 umfassen korrespondierende zweite Gewindegänge 621, 622, die zueinander ausgerichtet sind und in einem Gewindeeingriff eine zweite Kopplungsschnittstelle 62 bilden. Das Ausgleichselement 30 und das Grundelement 20 umfassen optionale korrespondierende Gleitabschnitte 641, 642, die zueinander ausgerichtet sind und gleitend gekoppelt sind, um eine dritte Kopplungsschnittstelle 63 bilden.

Die erste Kopplungsschnittstelle 61, die zweite Kopplungsschnittstelle 62 und optional die dritte Kopplungsschnittstelle 63 verlaufen im Wesentlichen parallel zueinander in axialer Richtung entlang des Grundelements 20 und des Ausgleichselements 30.

Das Grundelement 20 umfasst erste Gewindegänge 611 und zweite Gewindegänge 621 und optional den Gleitabschnitt 641. Die ersten Gewindegänge 611 bilden beispielsweise ein Innengewinde. Die zweiten Gewindegänge 621 bilden beispielsweise ein Außengewinde.

Das Ausgleichselement 30 umfasst korrespondierend erste Gewindegänge 612, zweite Gewindegänge 622 und optional den Gleitabschnitt 642. Die ersten Gewindegänge 612 des Ausgleichselements 30 bilden ein Außengewinde. Die zweiten Gewindegänge 622 des Ausgleichselements 30 bilden ein Innengewinde.

Das Grundelement 20 ist als Doppelring ausgebildet. Das Ausgleichselement 30 ist als Doppelring ausgebildet. Der jeweilige Doppelring ist aus einem Innenring 21, 31, einem Außenring 22, 32 und einem diese Ringe verbindenden Anlageabschnitt 23, 33 gebildet. Beispielsweise bildet der jeweilige Anlageabschnitt 23, 33 einen Verbindungssteg.

Das Grundelement 20 umfasst an seiner, insbesondere der zweiten, unteren Stirnseite S2 den Anlageabschnitt 23, welcher dazu dient, die Vorrichtung 10 gegen das erste Bauteil B1 abzustützen. Vom Anlageabschnitt 23 ragen ein fester, insbesondere lagefester oder positionsfester, Innenring 21 und ein fester, insbesondere lagefester oder positionsfester, Außenring 22 des Grundelements 20 ab, beispielsweise im Wesentlichen senkrecht nach oben. Unter dem festen Innenring 21 und dem festen Außenring 22 des Grundelements 20 wird insbesondere die feste Anordnung des Grundelements 20 in einer Haltevorrichtung 70, insbesondere einem Halteklip oder Haltering, verstanden, wobei das Grundelement 20 mittels einer Formschlussverbindung und/oder Kraftschlussverbindung in einer Aussparung 72 der Haltevorrichtung 70 lagefixiert gehalten ist. Insbesondere ist das Grundelement 20 in der Haltevorrichtung 70 gegen eine axiale Bewegung gesichert gelagert und somit fest angeordnet.

Die Haltevorrichtung 70 dient der Aufnahme des Grundelements 20 und des Ausgleichselements 30. Zur Fixierung der Vorrichtung 10 im Bauteil B1 umfasst die Haltevorrichtung 70 Haltearme 71.

Das Ausgleichselement 30 umfasst an seiner, insbesondere der zweiten Stirnseite S2 des Grundelements 20 gegenüberliegenden Stirnseite den Anlageabschnitt 33, welcher dazu dient, die Vorrichtung 10 gegen das zweite Bauteil B2 abzustützen und/oder das Ausgleichselement 30 am Grundelement 20 abzustützen. Vom Anlageabschnitt 33 ragen der bewegliche Innenring 31 und der bewegliche Außenring 32 des Ausgleichselements 30 ab, beispielsweise im Wesentlichen senkrecht nach unten. Unter beweglicher Innenring 31 und beweglicher Außenring 32 des Ausgleichselements 30 wird insbesondere die Beweglichkeit des Ausgleichselements 30 selbst, insbesondere dessen axiale Beweglichkeit relativ zu dem Grundelement 20, verstanden.

Der feste Innenring 21 des Grundelements 20 schließt einen Hohlraum H2 ein. Durch den Hohlraum H2 kann der bewegliche Innenring 31 des Ausgleichselements 30 durchgeführt sein. In der Ausgangsposition P1 (dargestellt in Figur 4) kann der bewegliche Innenring 31 des Ausgleichselements 30 vollständig im Hohlraum H2 aufgenommen sein.

Der feste Innenring 21 des Grundelements 20 ist mit den ersten Gewindegängen 611 als Innengewinde versehen. Im dargestellten Ausführungsbeispiel ist der feste Innenring 21 des Weiteren mit den zweiten Gewindegängen 621 als Außengewinde versehen. Das heißt, dass der feste Innenring 21 des Grundelements 20 beidseitig, beispielsweise an seiner Innenseite und seiner Außenseite, mit Gewindegängen 611, 621 versehen ist. Eine Innenseite des festen Außenrings 22, welcher der Außenseite des Innenrings 21 zugewandt ist, kann flächig und/oder eben, beispielsweise ebenflächig ausgebildet sein, oder eine andere Struktur und/oder Profilierung aufweisen.

Der bewegliche Innenring 31 des Ausgleichselements 30 schließt den Hohlraum H1 ein. Der bewegliche Innenring 31 des Ausgleichselements 30 ist mit den ersten Gewindegängen 612 als Außengewinde versehen. Der bewegliche Außenring 32 des Ausgleichselements 30 ist mit den zweiten Gewindegängen 622 als Innengewinde versehen. Der bewegliche Außenring 32 weist an seiner Innenseite, d. h. an einer der Außenseite des Innenrings 21 des Grundelements 20 zugewandten Seite, die zweiten Gewindegänge 622 auf. Eine Außenseite des beweglichen Außenrings 32 kann flächig und/oder eben, beispielsweise ebenflächig ausgebildet sein, oder eine andere Struktur und/oder Profilierung aufweisen.

Im vormontierten und/oder montierten Zustand und/oder in der Ausgangsposition P1 und/oder in der Ausgleichsposition P2 der Vorrichtung 10 ist der bewegliche Innenring 31 des Ausgleichselements 30 mit dem festen Innenring 21 des Grundelements 20 in Gewindeeingriff. Der bewegliche Außenring 32 des Ausgleichselements 30 ist mit dem festen Innenring 21 des Grundelements 20 in Gewindeeingriff. Der bewegliche Außenring 32 des Ausgleichselements 30 ist zwischen dem festen Innenring 21 des Grundelements 20 und dem festen Außenring 22 des Grundelements 20 angeordnet. Dadurch wird eine ineinander geschachtelte und axial bewegliche Kopplung von Grundelement 20 und Ausgleichselement 30 gebildet.

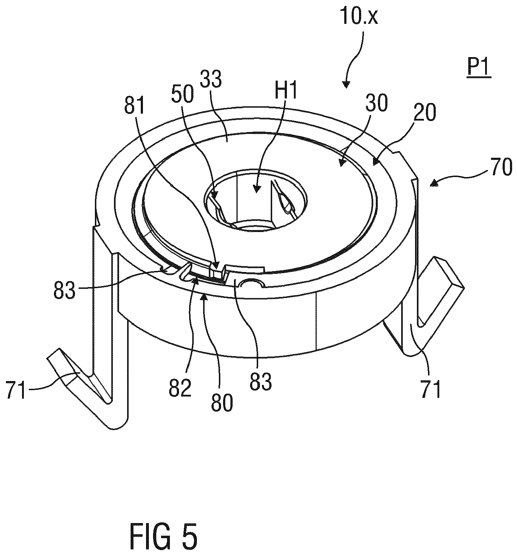

Die Vorrichtung 10 umfasst weiterhin beispielsweise die Haltevorrichtung 70, die mit dem Grundelement 20 gekoppelt ist. Die Haltevorrichtung 70 umfasst beispielsweise zumindest einen abstehenden Haltearm 71, der die Vorrichtung 10 im montierten Zustand gegen das erste Bauteil B1 abstützt und/oder mit dem ersten Bauteil B1 in Rasteingriff gelangt. Der Haltearm 71 kann als J-Clips, Klemmelement, Rastelement, Hakenelement, Federelement oder als ein anderes entsprechendes Halteelement ausgebildet sein. Die Haltevorrichtung 70 kann zumindest zwei sich gegenüberliegend angeordnete Haltearme 71 aufweisen, wie in Figur 5 gezeigt. Die Haltevorrichtung 70 kann auch ein aufschiebbares Rastelement sein. Die Haltevorrichtung 70 kann eine Bajonettvorrichtung oder ein Filmscharnier sein. Die Haltevorrichtung 70 ist beispielsweise am festen Außenring 22 des Grundelements 20 angeordnet und zumindest kraftschlüssig, formschlüssig und/oder stoffschlüssig mit diesem verbunden. Die Haltevorrichtung 70 kann im Ausgleichselement 30 oder Grundelement 20 integriert sein. Die Vorrichtung 10 kann zwei Haltevorrichtungen 70 umfassen. Die Haltevorrichtung 70 kann an dem Ausgleichselement 30 angeordnet sein. Eine zusätzliche oder alternative Haltevorrichtung 70 kann an dem Grundelement 20 angeordnet sein. Beispielsweise kann die Haltevorrichtung 70 oder die Haltevorrichtungen 70 jeweils auf das Ausgleichselement 30 und/oder auf das Grundelement 20 seitlich aufgeschoben sein.

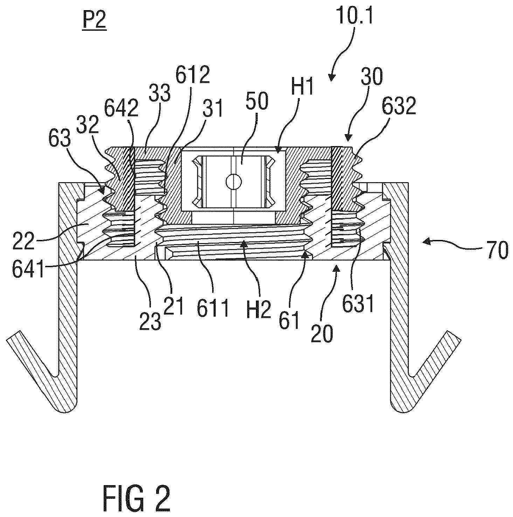

Figur 2 zeigt schematisch eine Schnittdarstellung eines zweiten Ausführungsbeispiels einer Vorrichtung 10.1 zum Ausgleichen von Toleranzen zwischen zwei miteinander zu verbindenden Bauteilen B1, B2 mit drei Kopplungsschnittstellen 61, 62 und 63.

Die Vorrichtung 10.1 nach Figur 2 unterscheidet sich von der Vorrichtung 10 nach Figur 1 darin, dass die Kopplungsschnittstellen 62 und 63 getauscht wurden, so dass die innere Kopplungsschnittstelle 62 als Gleitschnittstelle und die äußerer Kopplungsschnittstelle 63 als Gewindeschnittstelle ausgebildet sind.

Das Grundelement 20 umfasst erste Gewindegänge 611 der ersten Kopplungsschnittstelle 61 und einen Gleitabschnitt 641 für die zweite Kopplungsschnittstelle 62 und dritte Gewindegänge 631 für die dritte Kopplungsstelle 63. Die ersten Gewindegänge 611 bilden beispielsweise ein Innengewinde des festen Innenrings 21. Der Gleitabschnitt 641 bildet eine gleitende Außenfläche des festen Innenrings 21. Die dritten Gewindegänge 631 bilden beispielsweise ebenfalls ein Innengewinde des festen Außenrings 22.

Das Ausgleichselement 30 umfasst korrespondierend erste Gewindegänge 612 und dritte Gewindegänge 632 und einen korrespondierenden Gleitabschnitt 642. Die ersten Gewindegänge 612 des Ausgleichselements 30 bilden ein Außengewinde des beweglichen Innenrings 31. Die dritten Gewindegänge 632 des Ausgleichselements 30 bilden ebenfalls ein Außengewinde des beweglichen Außenrings 32. Der Gleitabschnitt 642 bildet eine gleitende Innenfläche des festen Außenrings 32.

Das Ausgleichselement 30 und das Grundelement 20 umfassen korrespondierende erste Gewindegänge 611, 612, die zueinander ausgerichtet sind und in einem Gewindeeingriff die erste Kopplungsschnittstelle 61 ausbilden. Das Ausgleichselement 30 und das Grundelement 20 umfassen korrespondierende Gleitabschnitte 641, 642, die zueinander ausgerichtet sind und gleitend mittels der zweiten Kopplungsschnittstelle 62 gekoppelt sind. Das Ausgleichselement 30 und das Grundelement 20 umfassen korrespondierende dritte Gewindegänge 631, 632, die zueinander ausgerichtet sind und in einem Gewindeeingriff die dritte Kopplungsschnittstelle 63 bilden.

Die erste Kopplungsschnittstelle 61 bis dritte Kopplungsschnittstelle 63 verlaufen im Wesentlichen parallel zueinander in axialer Richtung entlang des Grundelements 20 und des Ausgleichselements 30.

Das Grundelement 20 ist als Doppelring ausgebildet. Das Ausgleichselement 30 ist als Doppelring ausgebildet. Der jeweilige Doppelring ist aus einem Innenring 21, 31, einem Außenring 22, 32 und einem diese Ringe verbindenden Anlageabschnitt 23, 33 gebildet. Beispielsweise bildet der jeweilige Anlageabschnitt 23, 33 einen Verbindungssteg.

Das Grundelement 20 umfasst an seiner zweiten, unteren Stirnseite S2 den Anlageabschnitt 23, welcher dazu dient, die Vorrichtung 10.1 gegen das erste Bauteil B1 abzustützen. Vom Anlageabschnitt 23 ragen der Innenring 21 und der Außenring 22 des Grundelements 20 ab, beispielsweise im Wesentlichen senkrecht nach oben.

Das Ausgleichselement 30 umfasst an seiner der zweiten Stirnseite S2 des Grundelements 20 gegenüberliegenden Stirnseite den Anlageabschnitt 33, welcher dazu dient, die Vorrichtung 10.1 gegen das zweite Bauteil B2 abzustützen und/oder das Ausgleichselement 30 am Grundelement 20 abzustützen. Vom Anlageabschnitt 33 ragen der Innenring 31 und der Außenring 32 des Ausgleichselements 30 ab, beispielsweise im Wesentlichen senkrecht nach unten.

Der Innenring 21 des Grundelements 20 schließt einen Hohlraum H2 ein. Durch den Hohlraum H2 kann der Innenring 31 des Ausgleichselements 30 durchgeführt sein. In der Ausgangsposition P1 kann der Innenring 31 des Ausgleichselements 30 vollständig im Hohlraum H2 aufgenommen sein. Der Innenring 21 des Grundelements 20 ist mit den ersten Gewindegängen 611 versehen. Im dargestellten Ausführungsbeispiel ist der Außenring 22 des Grundelements 20 mit den zweiten Gewindegängen 621 versehen. Eine Außenseite des Innenrings 21 des Grundelements 20 kann im Gegensatz zu dem Ausführungsbeispiel gemäß Figur 1 beispielsweise ebenflächig ausgebildet sein.

Der Innenring 31 des Ausgleichselements 30 schließt den Hohlraum H1 ein. Der Innenring 31 des Ausgleichselements 30 ist mit den ersten Gewindegängen 612 versehen. Der Außenring 32 des Ausgleichselements 30 ist mit den zweiten Gewindegängen 622 versehen. Der Außenring 32 weist an seiner Außenseite die zweiten Gewindegänge 622 auf. Eine Innenseite des Außenrings 32 kann im Gegensatz zum Ausführungsbeispiel gemäß Figur 1 beispielsweise ebenflächig ausgebildet sein.

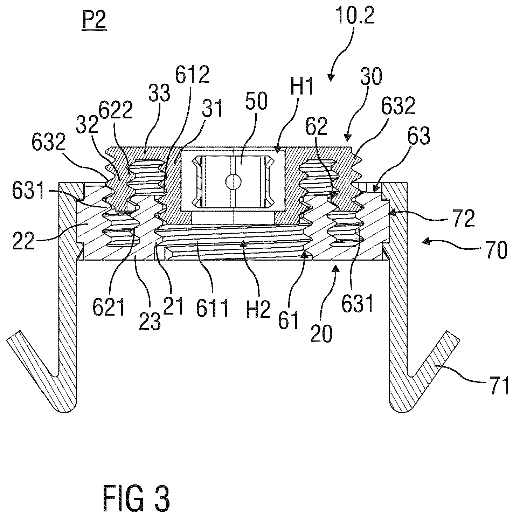

Figur 3 zeigt schematisch eine Schnittdarstellung eines dritten Ausführungsbeispiels einer Vorrichtung 10.2 zum Ausgleichen von Toleranzen zwischen zwei miteinander zu verbindenden Bauteilen B1, B2 mit drei Kopplungsschnittstellen 61 bis 63.

Das Grundelement 20 umfasst erste Gewindegänge 611, zweite Gewindegänge 621 und dritte Gewindegänge 631. Die ersten Gewindegänge 611 bilden beispielsweise ein Innengewinde. Die zweiten Gewindegänge 621 bilden beispielsweise ein Außengewinde. Die dritten Gewindegänge 631 bilden beispielsweise ein weiteres Innengewinde. Die zweiten Gewindegänge 621 und die dritten Gewindegänge 631 sind sich gegenüberliegend beziehungsweise zugewandt ausgebildet.

Das Ausgleichselement 30 umfasst korrespondierend erste Gewindegänge 612, zweite Gewindegänge 622 und dritte Gewindegänge 632. Die ersten Gewindegänge 612 des Ausgleichselements 30 bilden ein Außengewinde. Die zweiten Gewindegänge 622 des Ausgleichselements 30 bilden ein Innengewinde. Die dritten Gewindegänge 632 des Ausgleichselements 30 bilden ein weiteres Außengewinde. Die ersten Gewindegänge 612 und die zweiten Gewindegänge 622 sind sich gegenüberliegend beziehungsweise zugewandt ausgebildet.

Das Ausgleichselement 30 und das Grundelement 20 umfassen korrespondierende erste Gewindegänge 611, 612, die zueinander ausgerichtet sind und in einem Gewindeeingriff die erste Kopplungsschnittstelle 61 ausbilden. Das Ausgleichselement 30 und das Grundelement 20 umfassen korrespondierende zweite Gewindegänge 621, 622, die zueinander ausgerichtet sind und in einem Gewindeeingriff die zweite Kopplungsschnittstelle 62 bilden. Das Ausgleichselement 30 und das Grundelement 20 umfassen korrespondierende dritte Gewindegänge 631, 632, die zueinander ausgerichtet sind und in einem Gewindeeingriff die dritte Kopplungsschnittstelle 63 bilden.

Die erste Kopplungsschnittstelle 61, die zweite Kopplungsschnittstelle 62 und die dritte Kopplungsschnittstelle 63 verlaufen im Wesentlichen parallel zueinander in axialer Richtung entlang des Grundelements 20 und des Ausgleichselements 30.

Das Grundelement 20 ist als Doppelring ausgebildet. Das Ausgleichselement 30 ist als Doppelring ausgebildet. Der jeweilige Doppelring ist aus einem Innenring 21, 31, einem Außenring 22, 32 und einem diese Ringe verbindenden Anlageabschnitt 23, 33 gebildet. Beispielsweise bildet der jeweilige Anlageabschnitt 23, 33 einen Verbindungssteg.

Das Grundelement 20 umfasst an seiner zweiten, unteren Stirnseite S2 den Anlageabschnitt 23, welcher dazu dient, die Vorrichtung 10.2 gegen das erste Bauteil B1 abzustützen. Vom Anlageabschnitt 23 ragen der Innenring 21 und der Außenring 22 des Grundelements 20 ab, beispielsweise im Wesentlichen senkrecht nach oben.

Das Ausgleichselement 30 umfasst an seiner der zweiten Stirnseite S2 des Grundelements 20 gegenüberliegenden Stirnseite den Anlageabschnitt 33, welcher dazu dient, die Vorrichtung 10.2 gegen das zweite Bauteil B2 abzustützen und/oder das Ausgleichselement 30 am Grundelement 20 abzustützen. Vom Anlageabschnitt 33 ragen der Innenring 31 und der Außenring 32 des Ausgleichselements 30 ab, beispielsweise im Wesentlichen senkrecht nach unten.

Der Innenring 21 des Grundelements 20 schließt einen Hohlraum H2 ein. Durch den Hohlraum H2 kann der Innenring 31 des Ausgleichselements 30 durchgeführt sein. In der Ausgangsposition P1 kann der Innenring 31 des Ausgleichselements 30 vollständig im Hohlraum H2 aufgenommen sein. Der Innenring 21 des Grundelements 20 ist innenseitig mit den ersten Gewindegängen 611 versehen. Im dargestellten Ausführungsbeispiel ist der Innenring 21 des Weiteren außenseitig mit den zweiten Gewindegängen 621. Der Außenring 22 des Grundelements 20 ist mit den dritten Gewindegängen 631 versehen. Beispielsweise ist der Außenring 22 innenseitig mit den dritten Gewindegängen 631 versehen. Der Außenring 22 kann außenseitig eben und/oder flächig, beispielsweise ebenflächig, oder eine Struktur und/oder Profilierung aufweisen, die mit einer Haltevorrichtung 70 kraftschlüssig, formschlüssig und/oder stoffschlüssig verbunden sein kann.

Der Innenring 31 des Ausgleichselements 30 schließt den Hohlraum H1 ein. Der Innenring 31 des Ausgleichselements 30 ist mit den ersten Gewindegängen 612 versehen. Der Außenring 32 des Ausgleichselements 30 ist innenseitig mit den zweiten Gewindegängen 622 versehen. Der Außenring 32 des Ausgleichselements 30 ist außenseitig mit den dritten Gewindegängen 632 versehen. Grundsätzlich können das Grundelement 20 und das Ausgleichselement 30 im Wesentlichen die gleiche Form aufweisen. Das Grundelement 20 und das Ausgleichselement 30 können zueinander komplementär ausgebildet sein. Dadurch kann eine ineinander geschachtelte Bauweise mit einem ausreichenden Toleranzausgleichsweg und einer hohen Tragfähigkeit erzielt werden.

Im vormontierten und/oder montierten Zustand und/oder in der Ausgangsposition P1 und/oder in der Ausgleichsposition P2 der Vorrichtung 10.2 ist der Innenring 31 des Ausgleichselements 30 mit dem Innenring 21 des Grundelements 20 in Gewindeeingriff. Der Außenring 32 des Ausgleichselements 30 ist mit dem Innenring 21 des Grundelements 20 in Gewindeeingriff. Der Außenring 32 des Ausgleichselements 30 ist zwischen dem Innenring 21 des Grundelements 20 und dem Außenring 22 des Grundelements 20 angeordnet.

Figur 4 zeigt schematisch eine Schnittdarstellung der Vorrichtung 10.2 gemäß dem Ausführungsbeispiel nach Figur 3, wobei das Grundelement 20 und das Ausgleichselement 30 derart ineinander gesetzt sind, dass jeweils zwischen dem Grundelement 20 und dem Ausgleichselement 30 drei Kopplungsschnittstellen 61 bis 63 gebildet sind.

Figur 5 zeigt schematisch eine perspektivische Ansicht der Vorrichtung 10.x gemäß einem der Ausführungsbeispiele 10, 10.1 bis 10.3 nach Figuren 1 bis 4. Figur 5 zeigt die Vorrichtung 10.x beispielsweise in einer Ausgangsposition P1.

Die Vorrichtung 10.x kann beispielsweise jeweils eine Sicherungsanordnung 80 zur Sicherung des Ausgleichselements 30 gegen eine Bewegung relativ zu dem Grundelement 20 umfassen. Die Sicherungsanordnung 80 umfasst ein an einem äußeren Umfang, beispielsweise an einem Rand des Anlageabschnitts 33 des Ausgleichselements 30, ausgebildetes erstes Sicherungselement 81. Das erste Sicherungselement 81 ist an dem Ausgleichselement 30 angeformt. Das erste Sicherungselement 81 ist als ein abstehender Stift oder Nocken ausgebildet. Weiterhin umfasst die Sicherungsanordnung 80 ein an einem äußeren Umfang, beispielsweise an einem Rand des Anlageabschnitts 23, an dem Grundelement 20 angeordnetes zweites Sicherungselement 82. Das zweite Sicherungselement 82 ist an dem Grundelement 20 angeformt. Das zweite Sicherungselement 82 ist beispielsweise als eine äußere Führungsbahn und/oder Nockenbahn zur Zwangsführung des ersten Sicherungselements 81 ausgebildet. Dabei kann das zweite Sicherungselement 82 kreissegmentförmig ausgebildet sein und Endanschläge 83 aufweisen.

Die Sicherungsanordnung 80 ist beispielsweise eine Verliersicherung und/oder eine Transportsicherung. Mittels der Sicherungsanordnung 80 ist das Ausgleichselement 30 gegen eine Bewegung relativ zu dem Grundelement 20 gesichert, um während eines Transportes der Vorrichtung 10.x eine unbeabsichtigte Bewegung des Ausgleichselements 30 relativ zu dem Grundelement 20 zu verhindern.

Bei einer Montage der Vorrichtung 10.x und der Übertragung des Drehmoments von dem Schraubelement 40 auf das Ausgleichselement 30 wird dieses derart gedreht, dass das erste Sicherungselement 81 unter Überwindung eines vorgegebenen Sicherungsmoments über das zweite Sicherungselement 82 und/oder über einen ersten Endanschlag 83 gleitet und die Bewegung des Ausgleichselements 30 aus dem Grundelement 20 heraus freigibt. Das vorgegebene Sicherungsmoment ist dabei kleiner als das von dem Schraubelement 40 über das Mitnahmeelement 50 auf das Ausgleichselement 30 übertragbare Drehmoment.

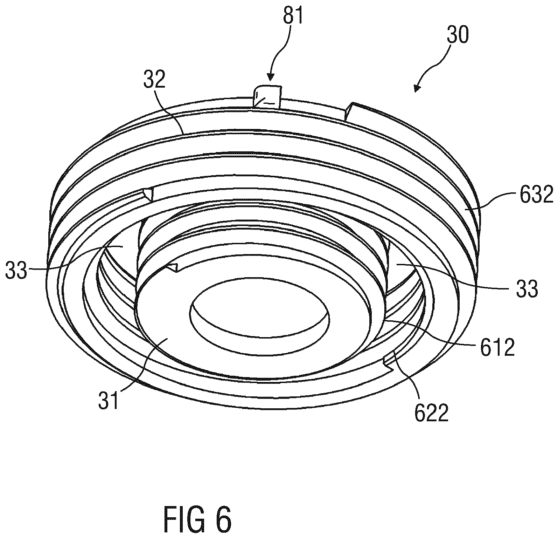

Figur 6 zeigt schematisch eine perspektivische Ansicht des Ausgleichselements 30 gemäß Figur 3. Das Ausgleichselement 30 ist als Doppelring mit den jeweils als Außengewinde ausgebildeten Gewindegängen 612 und 632 und dem als Innengewinde ausgebildeten Gewindegang 622 ausgebildet. Der Doppelring des Ausgleichselements 30 umfasst einen Innenring 31, einen Außenring 32 und einen die Ringe verbindenden Anlageabschnitt 33. Das Sicherungselement 81 des Ausgleichselements 30 ist beispielsweise als abstehendes Element ausgebildet.

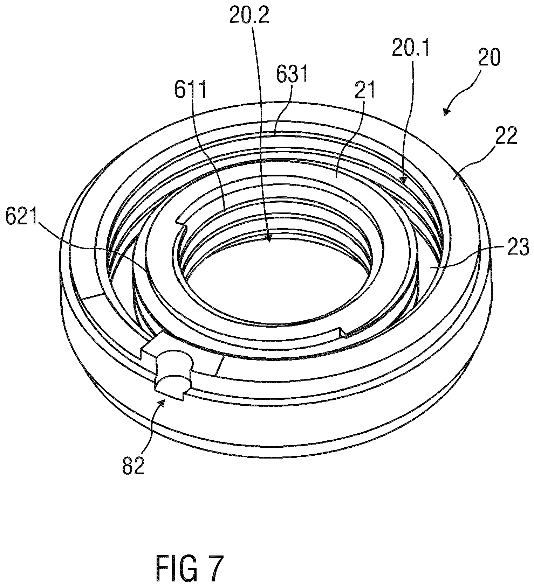

Figur 7 zeigt schematisch eine perspektivische Ansicht des Grundelements 20 gemäß Figur 3. Das Grundelement 20 ist als Doppelring mit den als Innengewinde ausgebildeten Gewindegängen 611 und 631 und dem als Außengewinde ausgebildeten Gewindegang 621 ausgebildet. Der Doppelring des Grundelements 20 umfasst einen Innenring 21, einen Außenring 22 und einen die Ringe verbindenden Anlageabschnitt 23. Das Sicherungselement 82 ist als Einkerbung für das abstehende Element des Ausgleichselements 30 ausgebildet.

Das Grundelement 20 weist beispielsweise zumindest einen ersten Kopplungsraum 20.1 und einen zum ersten Kopplungsraum 20.1 radial beabstandeten zweiten Kopplungsraum 20.2 auf. Das Ausgleichselement 30 ist ausgebildet, mit dem jeweiligen Kopplungsraum 20.1, 20.2 des Grundelements 20 in Gewindeeingriff zu stehen. Die Vorrichtung 10.x ermöglicht eine ineinander geschachtelte Bauweise bei gleichem Ausgleichsweg und vergleichsweise kleinerer, beispielsweise flacherer, Ausbildung.

Beispielsweise kann der erste Kopplungsraum 20.1 in Form einer Aussparung ausgebildet sein, der mit den Gewindegängen 621, 631 versehen ist. Der zweite Kopplungsraum 20.2 kann in Form einer weiteren Aussparung ausgebildet sein, der mit dem Gewindegang 611 versehen ist.

Der erste Kopplungsraum 20.1 und der zweite Kopplungsraum 20.2 können jeweils durch Gewindepaarungen aus einem Innengewinde des Ausgleichselements 30 und einem Außengewinde des Grundelements 20 oder aus einem Außengewinde des Ausgleichselements 30 und einem Innengewinde des Grundelements 20 gebildet sein.

Anstelle einer Gewindepaarung können das Ausgleichselement 30 und das Grundelement 20 in dem jeweiligen Kopplungsraum 20.1 und/oder 20.2 in Form einer Reibschlussverbindung miteinander im Eingriff stehen, wie dies beispielhaft in Figuren 1 und 2 anhand der Gleitabschnitte 641, 642 gezeigt ist. Die Reibschlussverbindung kann beispielsweise durch eine Wandpaarung von einer Innenwand des Ausgleichselements 30 und einer Außenwand des Grundelements 20 oder durch eine Wandpaarung von einer Außenwand des Ausgleichselements 30 und einer Innenwand des Grundelements 20 gebildet sein. Die Kopplungsräume 20.1, 20.2 können sich beispielsweise in axialer Richtung entlang des Grundelements 20 und/oder des Ausgleichselements 30 erstrecken. Die Kopplungsräume 20.1, 20.2 können radial voneinander beabstandet sein. Die Kopplungsräume 20.1, 20.2 können parallel zueinander verlaufend angeordnet sein.

Alle in den Beispielen gezeigten Gewindegänge 611 bis 632 sind als metrische Schraubgewinde ausgebildet und bilden eine mehrfache formschlüssige und kraftschlüssige Verbindung von Grundelement 20 und Ausgleichselement 30. Die jeweiligen Gewindegänge 611 bis 632 können als Rundgewinde oder Spitzgewinde ausgebildet sein. Die Gewindegänge 611 bis 632 sind als Bewegungsgewinde eingerichtet, welche eine drehende Bewegung des Ausgleichselements 30 relativ zum Grundelement 20 in eine geradlinige Ausgleichsbewegung des Ausgleichselement 30 relativ zum Grundelement 20 umwandeln.

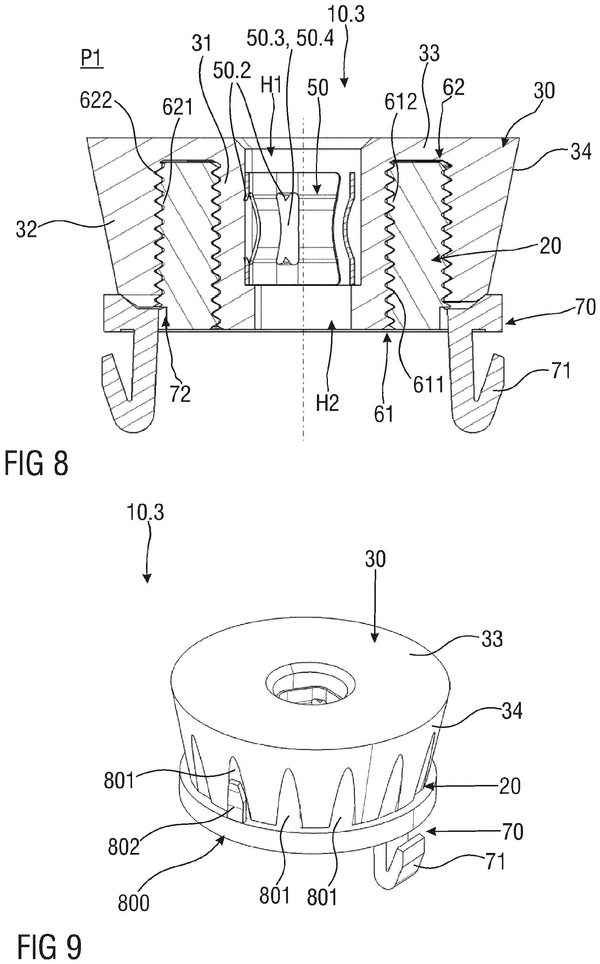

Figur 8 zeigt schematisch eine Schnittdarstellung eines vierten Ausführungsbeispiels einer Vorrichtung 10.3 zum Ausgleichen von Toleranzen zwischen zwei miteinander zu verbindenden Bauteilen B1, B2 mit zwei Kopplungsschnittstellen 61, 62.

Die Vorrichtung 10.3 umfasst ein Grundelement 20 und ein Ausgleichselement 30, welches durch Verdrehen relativ zum Grundelement 20 bewegbar ist. Das Ausgleichselement 30 ist koaxial zum Grundelement 20 angeordnet. Die Funktionen und Funktionsabläufe des Grundelements 20 und des Ausgleichselements 30 entsprechen den Funktionen und Funktionsabläufe wie zuvor beschrieben.

Grundsätzlich können das Grundelement 20 und das Ausgleichselement 30 im Wesentlichen die gleiche Form aufweisen. Das Grundelement 20 und das Ausgleichselement 30 können zueinander komplementär ausgebildet sein. Dadurch kann eine ineinander geschachtelte Bauweise mit einem ausreichenden Toleranzausgleichsweg und einer hohen Tragfähigkeit erzielt werden.

Im dargestellten Ausführungsführungsbeispiel ist das Ausgleichselement 30 konisch, beispielsweise konisch zulaufend, ausgebildet. Das Ausgleichselement 30 kann einen konisch ausgebildeten Ringkörper aufweisen. Das Ausgleichselement 30 kann außenseitig eine umlaufende Schräge 34 aufweisen. Eine andere Ringkörperform ist ebenfalls ausbildbar. Beispielsweise kann da Ausgleichselement 30 stirnseitig einen Außenumfang mit einem größeren Durchmesser und gegenüberliegend stirnseitig einen Außenumfang mit einem kleineren Durchmesser aufweisen.

Beim Verschrauben des Schraubelements 40 wird das Ausgleichselement 30 über das zwischen das Schraubelement 40 und das Ausgleichselement 30 geschaltete Mitnahmeelement 50 relativ zu dem Grundelement 20 verdreht und dadurch aus seiner Ausgangsposition P1, dargestellt in Figur 9, axial zu dem Grundelement 20 bewegt, zum Beispiel aus dem Grundelement 20 herausgefahren, bis es eine Ausgleichsposition erreicht, in welcher das Ausgleichselement 30 zum Grundelement 20 verstellt ist. Das Ausgleichselement 30 und das Grundelement 20 können dann jeweils an einem der Bauteile B1, B2 anliegen. Somit kann beispielsweise ein Fügespalt ausgeglichen oder überbrückt werden. Das Mitnahmeelement 50 stützt sich beispielsweise an einer Mantelfläche und/oder an einem innenliegenden Stützelement eines inneren Hohlraums H1 des Ausgleichselements 30 ab. Das Mitnahmeelement 50 kann eine Mitnahmefeder oder ein anderes Federelement sein.

Das Grundelement 20 und das Ausgleichselement 30 sind derart ineinander gesetzt, dass jeweils zwischen dem Grundelement 20 und dem Ausgleichselement 30 zwei Kopplungsschnittstellen 61, 62 gebildet sind. Die beiden Kopplungsschnittstellen 61, 62 sind radial voneinander beabstandet. Die Kopplungsschnittstellen 61, 62 sind durch mehrere ineinander geschachtelte und axial bewegliche Kopplungsabschnitte, insbesondere axial bewegliche Gewindegänge 611, 612 und 621, 622 von Grundelement 20 und Ausgleichselement 30 gebildet. Die erste Kopplungsschnittstelle 61 und die zweite Kopplungsschnittstelle 62 verlaufen im Wesentlichen parallel zueinander in axialer Richtung entlang des Grundelements 20 und des Ausgleichselements 30.

Das Grundelement 20 umfasst erste Gewindegänge 611 und zweite Gewindegänge 621. Die ersten Gewindegänge 611 bilden beispielsweise ein Innengewinde. Die zweiten Gewindegänge 621 bilden beispielsweise ein Außengewinde. Das Ausgleichselement 30 umfasst korrespondierend erste Gewindegänge 612 und zweite Gewindegänge 622. Die ersten Gewindegänge 612 des Ausgleichselements 30 bilden ein Außengewinde. Die zweiten Gewindegänge 622 des Ausgleichselements 30 bilden ein Innengewinde.

Das Grundelement 20 ist als Ring beziehungsweise ringförmig ausgebildet. Das Ausgleichselement 30 ist als Doppelring ausgebildet. Das Ausgleichselement 30 umfasst einen Innenring 31, einen Außenring 32 und einen die Ringe verbindenden Anlageabschnitt 33. Der Außenring 32 weist beispielswiese die Schräge 34 auf. Beispielsweise ist das Ausgleichselement 30 in Richtung des Grundelements 20 abgeschrägt ausgebildet.

Das Grundelement 20 umfasst eine Haltevorrichtung 70. Das Grundelement 20 und die Haltevorrichtung 70 können einteilig ausgebildet sein. Die Haltevorrichtung 70 kann als ein Haltering oder Halteklip ausgebildet sein. Die Haltevorrichtung 70 dient als Verbindungselement zu einer Kundenschnittstelle beziehungsweise zum einen der Bauteile B1, B2. Alternativ ist die Haltevorrichtung 70 als separates Element ausgebildet und mit dem Grundelement 20 verbunden. Das Grundelement 20 kann mittels einer Formschlussverbindung und/oder Kraftschlussverbindung in einer Aussparung 72 der Haltevorrichtung 70 lagefixiert gehalten sein. Das Grundelement 20 ist in der Haltevorrichtung 70 gegen eine axiale Bewegung gesichert gelagert und somit fest angeordnet. Zur Fixierung der Vorrichtung 10.3, beispielsweise im Bauteil B1, umfasst die Haltevorrichtung 70 Haltearme 71. Die Haltearme 71 können in Form eines Klips, beispielsweise L-förmigen oder J-förmigen Klips, oder als Klappscharnier oder eine Bajonettvorrichtung ausgebildet sein.

Im dargestellten Ausführungsbeispiel ist das Ausgleichselement 30 derart mit dem Grundelement 20 verbunden, dass der Außenumfang mit kleinerem Durchmesser des Ausgleichselements 30 in Richtung der Haltevorrichtung 70 und/oder des Grundelements 20 gerichtet ist. Eine umgekehrte Ausbildung beziehungsweise Anordnung ist ebenfalls möglich. Die Haltevorrichtung 70 kann eine die Aussparung 72 umlaufende Aufnahme aufweisen, die den Außenumfang des Ausgleichselements 30, insbesondere den mit kleinerem Durchmesser, umgibt.

Das Mitnahmeelement 50 ist leicht abgewandelt und umfasst als Ausnehmung 50.3 Längsschlitze 50.4. Die radial nach außen vorstehenden Nasen 50.2 sind an gegenüberliegenden Längsenden der als Längsschlitze 50.4 ausgebildeten Ausnehmungen 50.3 angeordnet.

Figur 9 zeigt schematisch eine perspektivische Ansicht der Vorrichtung 10.3 gemäß dem Ausführungsbeispiel nach Figur 8, beispielsweise in einem Transportzustand.

Die Vorrichtung 10.3 kann eine Sicherungsanordnung 800 zur Sicherung des Ausgleichselements 30 gegen eine Bewegung relativ zu dem Grundelement 20 umfassen. Die Sicherungsanordnung 800 umfasst zumindest ein an einem äußeren Umfang, beispielsweise an einer äußeren Mantelfläche des Ausgleichselements 30, insbesondere an dessen Schräge 34, ausgebildetes erstes Sicherungselement 801. Das erste Sicherungselement 801 ist an dem Ausgleichselement 30 angeformt. Das erste Sicherungselement 801 ist als eine Nut, ein Führungskanal, eine Aussparung oder Ausnehmung ausgebildet. Im dargestellten Ausführungsbeispiel umfasst das Ausgleichselement 30 eine Mehrzahl von Sicherungselementen 801.

Das Ausgleichselement 30 ist am Außenumfang mit einer Mehrzahl von beispielsweise Nuten oder Aussparungen oder Auswölbungen oder Rippen 803 als

Sicherungselemente 801 versehen. Insbesondere ist der Außenring 32 des Ausgleichselements 30 mit einer Mehrzahl von Sicherungselementen 801 versehen. Die Sicherungselemente 801 erstrecken sich axial und sind die äußere Mantelfläche des Ausgleichselements 30 umlaufend und verteilt angeordnet. Die Sicherungselemente 801 sind voneinander beabstandet angeordnet.

Weiterhin umfasst die Sicherungsanordnung 800 zumindest ein an einem äußeren Umfang, beispielsweise an einem Rand der Haltevorrichtung 70 und/oder des Grundelements 20, angeordnetes zweites Sicherungselement 802. Das zweite Sicherungselement 802 ist beispielsweise an der Haltevorrichtung 70, beispielsweise an einen Grundkörper der Haltevorrichtung 70 und/oder an dem Grundelement 20 angeformt. Das zweite Sicherungselement 802 kann ein Federelement ausgebildet sein. Das zweite Sicherungselement 802 ist beispielsweise als ein abstehender Stift, eine abstehende Rastnase, ein Rasthaken oder eine Lasche ausgebildet. Das zweite Sicherungselement 802 kann in eines der Sicherungselemente 801 des Ausgleichselements 30 verrasten. Das Sicherungselement 802 ist radial nach innen vorgespannt.

Bei einer Montage der Vorrichtung 10.3 und der Übertragung des Drehmoments von dem Schraubelement 40 auf das Ausgleichselement 30 wird dieses derart gedreht, dass das zweite Sicherungselement 802 unter Überwindung eines vorgegebenen Sicherungsmoments über das erste Sicherungselement 801 gleitet und die Bewegung des Ausgleichselements 30 aus dem Grundelement 20 heraus freigibt. Das vorgegebene Sicherungsmoment ist dabei kleiner als das von dem Schraubelement 40 über das Mitnahmeelement 50 auf das Ausgleichselement 30 übertragbare Drehmoment.

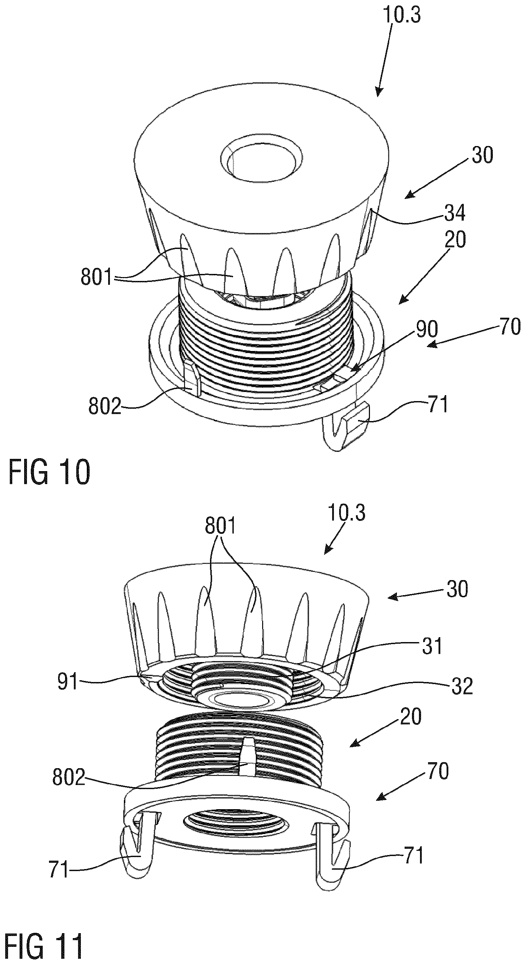

Figur 10 zeigt schematisch eine weitere perspektivische Ansicht der Vorrichtung 10.3 gemäß dem Ausführungsbeispiel nach Figur 8. Figur 11 zeigt schematisch eine perspektivische Ansicht der Vorrichtung 10.3 gemäß Figur 10.

Optional zusätzlich kann das Ausgleichselement 30 an seiner zum Grundelement 20 gerichteten Unterseite zumindest einen Endanschlag 90 aufweisen. Die Haltevorrichtung 70 und/oder das Grundelement 20 können/kann einen korrespondierenden Endanschlag 91 aufweisen. Beispielsweise sind die Endanschläge 90, 91 in Form von abstehenden und korrespondierenden Nasen oder anderen Anlageelemente ausgebildet.

Die Sicherungsanordnung 800 ist beispielsweise eine Verliersicherung und/oder eine Transportsicherung. Mittels der Sicherungsanordnung 800 ist das Ausgleichselement 30 gegen eine Bewegung relativ zu dem Grundelement 20 gesichert, um während eines Transportes der Vorrichtung 10.3 eine unbeabsichtigte Bewegung des Ausgleichselements 30 relativ zu dem Grundelement 20 zu verhindern. Optional zusätzlich kann eine Verdrehung, insbesondere Überdrehung, des Ausgleichselements 30 zum Grundelement 20 mittels der Endanschläge 90, 91 verhindert werden.

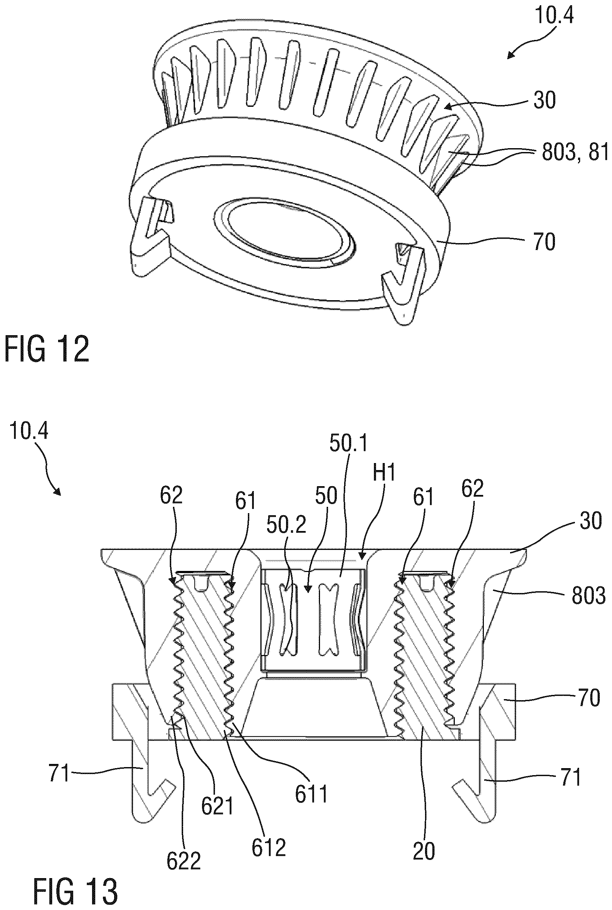

Figur 12 zeigt schematisch eine perspektivische Ansicht eines fünften Ausführungsbeispiels einer Vorrichtung 10.4 zum Ausgleichen von Toleranzen zwischen zwei miteinander zu verbindenden Bauteilen B1, B2 (dargestellt in Figur 1).

Die Vorrichtung 10.4 unterscheidet sich von den Vorrichtungen 10 bis 10.3 in der Außenform des Ausgleichselements 30 und der Form und dem Aufbau der Sicherungsanordnung 80 des Ausgleichselements 30. Anstelle von Kerben oder Nuten als Sicherungselemente 81 weist das Ausgleichselement 30 nach Figur 12 eine Anzahl von radial nach außen abstehenden Rippen 803 als Sicherungselemente 81 auf.

Das Ausgleichselement 30 weist ähnlich wie das Ausgleichselement 30 nach Figuren 8 bis 11 eine kegelstumpfförmige Außenkontur auf. Das Ausgleichselement 30 nach Figuren 1 bis 7 weist eine zylinderförmige Außenkontur auf.

Figur 13 zeigt schematisch eine Schnittdarstellung der Vorrichtung 10.4 gemäß Fig. 12. Die Vorrichtung 10.4 weist die zwei Kopplungsschnittstellen 61, 62 zwischen dem Ausgleichselement 30 und dem Grundelement 20 mit den zugehörigen ineinandergreifenden Gewindegängen 611 und 612 beziehungsweise 621 und 622 auf. Das Mitnahmeelement 50 ist vollständig im Hohlraum H1 des Ausgleichselements 30 angeordnet und umfasst den Spreizkörper 50.1 mit den Nasen 50.2.

Die Haltevorrichtung 70 umfasst die zwei einander gegenüberliegenden Haltearme 71 zum lösbaren Anordnen in einem der Bauteile B1 oder B2.

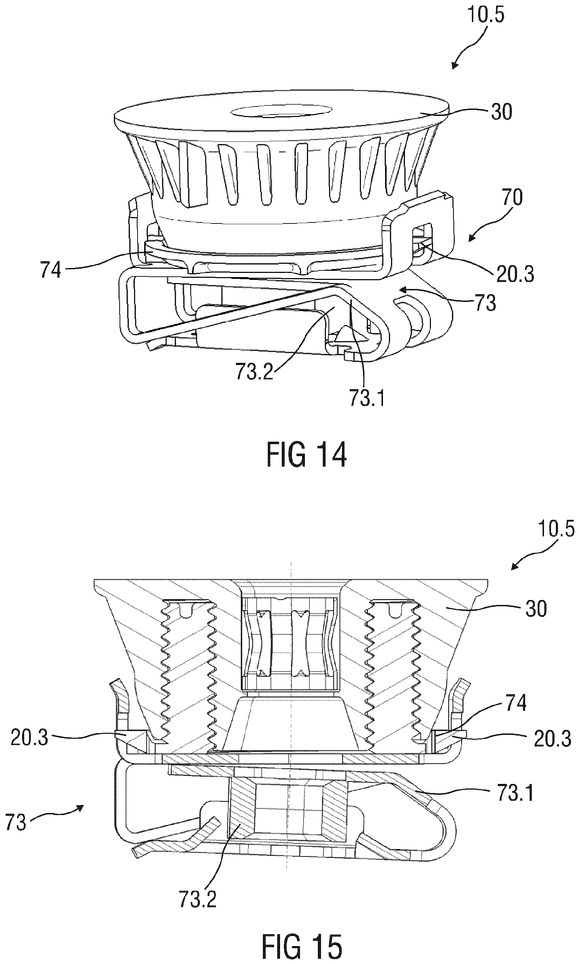

Figur 14 zeigt schematisch eine perspektivische Ansicht eines sechsten Ausführungsbeispiels einer Vorrichtung 10.5 zum Ausgleichen von Toleranzen zwischen zwei miteinander zu verbindenden Bauteilen B1, B2. Das Ausgleichselement 30 ist analog zum Ausgleichselement 30 nach Figuren 12 und 13 ausgebildet.

Die Vorrichtung 10.5 unterscheidet sich nur in der Haltevorrichtung 70. Die Haltevorrichtung 70 ist als eine Klemmeinheit 73 ausgebildet. Die Klemmeinheit 73 ist eingerichtet, dass sie sowohl an dem Grundelement 20, insbesondere an Klemmnasen 20.3, als auch an einem der Bauteile B1 oder B2 mittels einer Klemmspange 73.1 lösbar befestigt werden kann.

Die Klemmspange 73.1 ist beispielsweise aus Federstahl gefertigt und kann ein Mutterelement 73.2 zur Verschraubung mit dem sich durch die Vorrichtung 10.5 hindurch erstreckenden Schraubelement 40 (dargestellt in Figur 1), zum Beispiel einer Schraube oder einem Gewindebolzen, umfassen. Die Klemmspange 73.1 mit Mutterelement 73.2 wird auch als Schnappmutter bezeichnet. Mittels der Klemmspange 73.1 ist die Vorrichtung 10.5 an einem der Bauteile B1 oder B2 befestigbar.

Bei dem dargestellten Ausführungsbeispiel befindet sich die Klemmspange 73.1 an einer Unterseite der Vorrichtung 10.5. Die Klemmspange 73.1 ist an den zwei Klemmnasen 20.3 (auch Befestigungshaken genannt) eingehängt, welche an einem Befestigungsring 74 der Haltevorrichtung 70 der Vorrichtung 10.5 beispielsweise angeformt sind. Der Befestigungsring 74 kann beispielsweise fest mit dem Grundelement 20 verbunden sein.

Figur 15 zeigt schematisch eine Schnittdarstellung der Vorrichtung 10.5 gemäß Fig. 14.

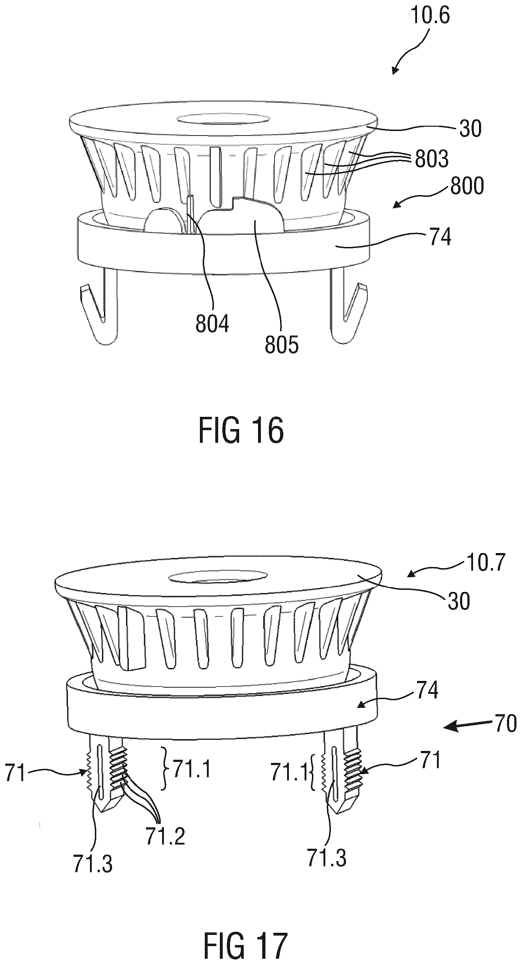

Figur 16 zeigt schematisch eine perspektivische Ansicht eines siebten Ausführungsbeispiels einer Vorrichtung 10.6 zum Ausgleichen von Toleranzen zwischen zwei miteinander zu verbindenden Bauteilen B1, B2. Die Vorrichtung 10.6 unterscheidet sich von den vorherigen Beispielen in der Art der als Transportsicherung ausgebildeten Sicherungsanordnung 80 oder 800.

Die Sicherungsanordnung 800 nach Figur 16 umfasst die Rippen 803 am Ausgleichselement 30 und axial vom Befestigungsring 74 axial abstehende Eingreifelemente 804, 805. Das Eingreifelement 804 ist als ein axial abstehender Steg ausgebildet. Das Eingreifelement 805 kann zusätzlich als ein Radialanschlag ausgebildet sein.

Figur 17 zeigt schematisch eine perspektivische Ansicht eines achten Ausführungsbeispiels einer Vorrichtung 10.7 zum Ausgleichen von Toleranzen zwischen zwei miteinander zu verbindenden Bauteilen B1, B2.

Die Vorrichtung 10.7 unterscheidet sich nur in der Form von den vom Befestigungsring 74 abstehenden Haltearmen 71. Die Haltearme 71 umfassen anstelle eines Haltehakens, wie in Figuren 1 bis 5, 8 bis 12, 13, 16, Rastabschnitte 71.1 mit einer Reihe von Rastzähnen 71.2. Zum leichteren Einrasten sind die Haltearme 71 flexibel ausgebildet. Beispielsweise weisen die Haltearme 71 einen Hohlschlitz 71.3 auf.

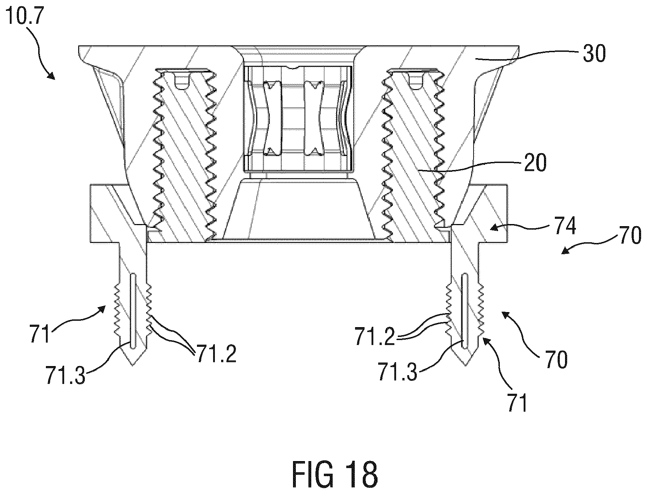

Figur 18 zeigt schematisch eine Schnittdarstellung der Vorrichtung 10.7 gemäß Figur 17.

### BEZUGSZEICHENLISTE

- 10.x, 10, 10.1 bis 10.5: Vorrichtung
- 20: Grundelement
- 20.1,20.2: Kopplungsraum
- 20.3: Klemmnasen
- 21: Innenring
- 22: Außenring
- 23: Anlageabschnitt
- 30: Ausgleichselement
- 31: Innenring
- 32: Außenring
- 33: Anlageabschnitt
- 34: Schräge
- 40: Schraubelement
- 50: Mitnahmeelement
- 50.1: Spreizkörper
- 50.2: Nase
- 50.3: Ausnehmung
- 50.4: Längsschlitz
- 61 bis 63: Kopplungsschnittstelle
- 611 bis 632: Gewindegang
- 641,642: Gleitabschnitt
- 70: Haltevorrichtung
- 71: Haltearm
- 71.1: Rastabschnitt
- 71.2: Rastzahn
- 71.3: Hohlschlitz
- 72: Aussparung
- 73: Klemmeinheit
- 73.1: Klemmspange
- 73.2: Mutterelement
- 74: Befestigungsring
- 80, 800: Sicherungsanordnung
- 81, 82, 801, 802: Sicherungselement
- 803: Rippe
- 83: Endanschlag
- 90,91: Endanschlag

- B1, B2: Bauteil
- H1, H2: Hohlraum
- S1, S2: Stirnseite
- P1: Ausgangsposition
- P2: Ausgleichsposition
- R: Richtung

## Patentansprüche

1. Vorrichtung (10.x) zum Ausgleichen von Toleranzen zwischen zwei miteinander zu verbindenden Bauteilen (B 1, B2), umfassend zumindest:
- ein Grundelement (20),
- ein mit dem Grundelement (20) in Gewindeeingriff stehendes Ausgleichselement (30), welches durch Verdrehen relativ zu dem Grundelement (20) aus einer Ausgangsposition (P1) bewegbar ist,
- ein radial nachgiebiges und in eine vorgegebene Richtung (R) wirkendes Mitnahmeelement (50), und
- eine Haltevorrichtung (70, 700) zur Verbindung mit einem der Bauteile (B1, B2), wobei die Haltevorrichtung (70, 700) als ein integrierter Teil des Grundelements (20) oder des Ausgleichselements (30) oder als ein separates Teil ausgebildet ist und lösbar an einem der Bauteile (B1, B2) formschlüssig und/oder kraftschlüssig anordenbar ist, und
- wobei das Grundelement (20) und das Ausgleichselement (30) derart ineinander gesetzt sind, dass zwischen dem Grundelement (20) und dem Ausgleichselement (30) mindestens zwei Kopplungsschnittstellen (61 bis 63) gebildet sind.

2. Vorrichtung (10.x) nach Anspruch 1, wobei das Mitnahmeelement (50) als ein sich radial aufweitender Spreizkörper (50.1) ausgebildet ist.

3. Vorrichtung (10.x) nach Anspruch 1 oder 2, wobei das Mitnahmeelement (50) vollständig von dem Ausgleichselement (30) aufgenommen ist.

4. Vorrichtung (10.x) nach einem der vorhergehenden Ansprüche, wobei das Mitnahmeelement (50) eine Anzahl von radial nach außen vorstehenden Nasen (50.2) umfasst.

5. Vorrichtung (10.x) nach einem der vorhergehenden Ansprüche, wobei die Kopplungsschnittstellen (61 bis 63) radial voneinander beabstandet sind.

6. Vorrichtung (10.x) nach einem der vorhergehenden Ansprüche, wobei die Kopplungsschnittstellen (61 bis 63) durch mehrere ineinander geschachtelte und axial bewegliche Gewindegänge (611 bis 632) von Grundelement (20) und Ausgleichselement (30) gebildet sind.

7. Vorrichtung (10.x) nach einem der vorhergehenden Ansprüche, wobei das Grundelement (20) und das Ausgleichselement (30) jeweils als Doppelringe ausgebildet sind.

8. Vorrichtung (10.x) nach einem der vorhergehenden Ansprüche, wobei das Ausgleichselement (30) einen Außenring (32) aufweist, der mit einem Innengewinde und einem Außengewinde versehen ist.

9. Vorrichtung (10.x) nach einem der vorhergehenden Ansprüche, wobei das Ausgleichselement (30) einen Innenring (31) aufweist, der mit einem Außengewinde versehen ist.

10. Vorrichtung (10.x) nach einem der vorhergehenden Ansprüche, wobei das Grundelement (20) einen Außenring (22) aufweist, der mit einem Innengewinde versehen ist.

11. Vorrichtung (10.x) nach einem der vorhergehenden Ansprüche, wobei das Grundelement (20) einen Innenring (21) aufweist, der mit einem Außengewinde und einem Innengewinde versehen ist.

12. Vorrichtung (10.x) nach einem der vorhergehenden Ansprüche, wobei eine Sicherungsanordnung (80, 800) zur Sicherung des Ausgleichselements (30) gegen eine Bewegung relativ zu dem Grundelement (20) vorgesehen ist.

13. Vorrichtung (10.x) nach Anspruch 12, wobei die Sicherungsanordnung (80, 800) als eine Transportsicherung ausgebildet ist und eine Anzahl von nach außen vorstehenden Sicherungselementen (81, 801) umfasst, die an einer Umfangsseite und/oder einer Stirnseite des Ausgleichselements (30) und des Grundelements (20) angeordnet sind.

14. Vorrichtung (10.x) nach einem der vorhergehenden Ansprüche, wobei die zumindest eine Haltevorrichtung (70) vorgesehen und eingerichtet ist, die Vorrichtung (10.x) an einem der Bauteile (B1, B2) vorzumontieren.

15. Vorrichtung (10.x) nach einem der vorhergehenden Ansprüche, wobei die Haltevorrichtung (70) an dem Außenring (22) des Grundelements (20) oder an dem Ausgleichselement (30) angeordnet ist.
